# EUROPÄISCHE PATENTSCHRIFT

(11) **EP 2 054 177 B1**
(45) Veröffentlichungstag und Bekanntmachung des Hinweises auf die Patenterteilung: **02.06.2010**
(21) Anmeldenummer: 07764393.0
(22) Anmeldetag: 21.06.2007
(51) Int. Cl.: B21D 24/02, B21D 24/14, B30B 15/16, F16F 9/48, B21D 28/20

(54) **VERFAHREN UND VORRICHTUNG ZUR SCHNITTSCHLAGDÄMPFUNG**
METHOD AND DEVICE FOR DAMPENING CUTTING SHOCK
PROCÉDÉ ET DISPOSITIF D'AMORTISSEMENT DES PERCUSSIONS DE COUPE

(30) Priorität: 23.08.2006 DE 102006039463
(43) Veröffentlichungstag der Anmeldung: 06.05.2009
(73) Patentinhaber: Müller Weingarten AG, 88250 Weingarten (DE)
(72) Erfinder: MÜLLER, Markus, 99189 Gebesee (DE)
(74) Vertreter: Eisele, Otten, Roth & Dobler
(86) Internationale Anmeldenummer: PCT/DE2007/001094
(87) Internationale Veröffentlichungsnummer: WO 2008/022607

(56) Entgegenhaltungen:
- EP-A- 1 602 419
- DE-A1- 2 621 726
- DE-A1- 2 824 176
- DE-A1- 2 911 820
- DE-A1- 10 252 625

## Beschreibung

Die Erfindung betrifft ein Verfahren und eine Vorrichtung zur Reduzierung des Schnittschlages an einer Presse beim Schneiden metallischer Werkstücke, gemäß dem Oberbegriff des Anspruchs 1 bzw. 8.

### Stand der Technik

Der Schnittschlag beim Schneiden metallischer Werkstücke wird durch die Elastizität der Presse und durch den plötzlichen Abfall der Schneidkraft beim Durchbrechen des Werkzeuges durch das Werkstück, dem so genannten Schnittbruch, verursacht. Beim Schneiden werden Presse und Werkzeug vor dem Schnittbruch mit der für die Überwindung des Schneidwiderstandes erforderlichen Kraft vorgespannt. Infolge der Elastizität der Presse wird dabei hauptsächlich im Pressenkörper und im Antrieb der Presse Energie gespeichert. Diese Federenergie wird beim Schnittbruch schlagartig frei und beschleunigt den Pressenstößel mit dem Werkzeugoberteil nach unten. Gleichzeitig wird der Pressenkörper nicht nur bis in den Ausgangszustand entspannt, sondern er schwingt darüber hinaus in die entgegengesetzte Richtung. Die Auswirkungen eines derart ungedämpften Kraftabfalls oder Schnittschlages in einer Presse sind neben einer starken Lärmentwicklung vor allen Dingen sehr hohe Beanspruchungen der Pressenbauteile, insbesondere des Pressenkörpers. Von hydraulischen Pressen sind Vorrichtungen zur Schnittschlagdämpfung bekannt, die aus einem Hydraulikzylinder und einer abflussseitig angeordneten Blende bestehen und deren Kolbenstangen durch die Bewegung des Pressenstößels eingefahren werden. Je nach Geschwindigkeit des Pressenstößels entsteht über diese Blende eine Druckdifferenz, die eine Gegenkraft auf den Pressenstößel bewirkt. Insbesondere bei Schneidarbeiten verlangsamt sich der Pressenstößel unmittelbar vor Beginn des Schnittes zum Aufbringen der Schnittkraft und wird nach dem Materialdurchbruch beschleunigt. Vorzugsweise erfolgt das Aufsetzen des Pressenstößels auf die Kolbenstange des Schnittschlagdämpfers im Bereich der langsamen Bewegung, um eine geringe Gegenkraft durch den Schnittschlagdämpfer zu erfahren. Der Geschwindigkeitszuwachs des Pressenstößels nach dem Schnitt bewirkt durch die fest eingestellte Blende eine entsprechend hohe Gegenkraft, die den Pressenstößel abbremst und so den Schnittschlag dämpft.

Nachteilig an dieser Ausführung der Schnittschlagdämpfung ist, dass dem Pressenstößel eine Kraft entgegengebracht wird, die nur von seiner Geschwindigkeit abhängig ist und damit bei hohen Geschwindigkeiten des Pressenstößels vor Schnittbeginn eine entsprechende Gegenkraft erzeugt, welche zusätzlich durch den Pressenantrieb aufgebracht werden muss. Weiterhin ist nachteilig, dass durch das Abströmen von Hydrauliköl über eine Blende mit großer Druckdifferenz ein entsprechender Wärmeeintrag in das Medium erfolgt, was zusätzliche Kühleinrichtungen erfordert.

Eine weitere Möglichkeit den Schnittschlag zu dämpfen, offenbart die gattungsgemäße EP 16 02 419 A1. Darin wird eine Presse zum Schneiden von hochfesten Blechen beschrieben, die beim Schneiden durch Abstützung des Pressenstößels auf dem dem Oberwerkzeug zugeordneten Blechhalter dem Pressenstößel eine zur Blechhaltung kleinere Kraft entgegenbringt. Vorzugsweise wird vor dem Schneiden eine zur Blechhaltung kleinere Kraft zur Abstützung des Stößels aufgebracht und kurz vor dem Materialdurchbruch auf eine größere Gegenkraft umgeschaltet. Die Umschaltung erfolgt in Abhängigkeit von der Bewegungsgeschwindigkeit des Pressenstößels.

Nachteilig an dieser Ausführungsform ist die sehr aufwendige und sensible Regelung, welche sich unter Produktionsbedingungen nur sehr schwer prozesssicher aufrechterhalten lässt. Besonders problematisch ist hierbei, dass sich der Geschwindigkeitsschwellwert zur Umschaltung bei Variation der Pressenhubzahl verändert und durch entsprechende Sensoren erfasst werden muss.

Ein weiterer Nachteil besteht darin, dass die Regelungsparameter werkstückspezifisch sind und dadurch bei jedem Werkzeugwechsel angepasst werden müssen.

### Aufgabe und Vorteil der Erfindung

Der Erfindung liegt die Aufgabe zugrunde, ausgehend vom Stand der Technik ein Verfahren und eine Vorrichtung zur Schnittschlagdämpfung zu entwickeln, wobei die Vorrichtung einfach im Aufbau und prozesssicher in der Funktion ist und ohne aufwendige Regelung betrieben werden kann. Insbesondere soll vermieden werden, dass Öl über eine Blende zur Erzeugung einer Gegenkraft abströmt, und dass eine Umschaltung auf eine höhere Gegenkraft in Abhängigkeit von der Geschwindigkeit des Pressenstößels erfolgt.

Diese Aufgabe wird ausgehend von einem Verfahren und einer Vorrichtung nach den Oberbegriffen der Ansprüche 1 und 8 durch die kennzeichnenden Merkmale der Ansprüche 1 und 8 gelöst. In den Unteransprüchen sind vorteilhafte und zweckmäßige Weiterbildungen des erfindungsgemäßen Verfahrens bzw. der erfindungsgemäßen Vorrichtung angegeben. Erfindungsgemäß wird die Aufgabe dadurch gelöst, dass sich der Pressenstößel auf Kolbenstangen eines Hydrauliksystems abstützt, welches während des Schneidvorganges in Wirkverbindung zum Werkzeugunterteil bzw. zum Pressentisch steht und über ein abgeschlossenes Ölvolumen verfügt. Dieses Ölvolumen wird durch den Pressenstößel gegen einen schwimmenden Kolben verdrängt, der rückseitig mit dem Druck aus einem Speicher beaufschlagt wird, bis der Kolben gegen einen verstellbaren Anschlag gefahren ist. Danach baut sich der Druck aufgrund eines kleineren eingeschlossenen Ölvolumens über einen kurzen Kompressionsweg sehr schnell auf bis bei Erreichen eines Druckschwellwertes der Kolben eines Druckübersetzers gegen den gleichen Speicherdruck bewegt wird. Das Verhältnis der beiden Gegendrücke wird durch das Flächenverhältnis des Druckübersetzers bestimmt. Der Umschaltpunkt von niedriger zu hoher Gegenkraft ist damit nur abhängig von dem Weg des Pressenstößels, der zurückgelegt werden muss, bis der schwimmende Kolben den verstellbaren Anschlag erreicht hat. Der Beginn des Materialdurchbruches wird werkzeugabhängig einmalig ermittelt und über den verstellbaren Anschlag eingestellt. Veränderte Schnittlagen, z.B. durch Nacharbeit der Schneidkanten können ebenfalls darüber kompensiert werden.

In einer ersten Ausführungsform ist jede Kolbenstange bzw. Zylinderkammer mit jeweils einem Druckübersetzer und einem schwimmenden Kolben verbunden, d. h. bei jedem Abstützpunkt kann individuell eingestellt werden, bei welcher Stößelposition die Umschaltung auf eine höhere Gegenkraft erfolgt. In einer anderen Ausführungsform sind jeweils mehrere Zylinder im Verbund zu einem System zusammengefasst, d. h. die Umschaltung auf eine höhere Gegenkraft erfolgt synchron durch einen gemeinsamen Einstellwert.

Eine weitere Variante der erfindungsgemäßen Lösung ist, dass die Kolbenstangen des Hydrauliksystems nicht wie oben beschrieben in Wirkverbindung mit dem Werkzeugunterteil bzw. dem Pressentisch stehen, sondern direkt auf den Blechhalter wirken.

Weitere Einzelheiten und Vorteile der Erfindung ergeben sich aus dem, anhand der Figuren dargestellten Ausführungsbeispiels.

Es zeigen:
- Figur 1: Presse mit erfindungsgemäßer Schnittschlagdämpfungs- vorrichtung
- Figur 2: Schnittschlagdämpfungsvorrichtung in unbelastetem Zu- stand
- Figur 3: Schnittschlagdämpfungssystem unter geringer Belastung vor dem Materialdurchbruch
- Figur 4: Schnittschlagdämpfungssystem unter hoher Belastung nach dem Materialdurchbruch

### Beschreibung eines Ausführungsbeispiels

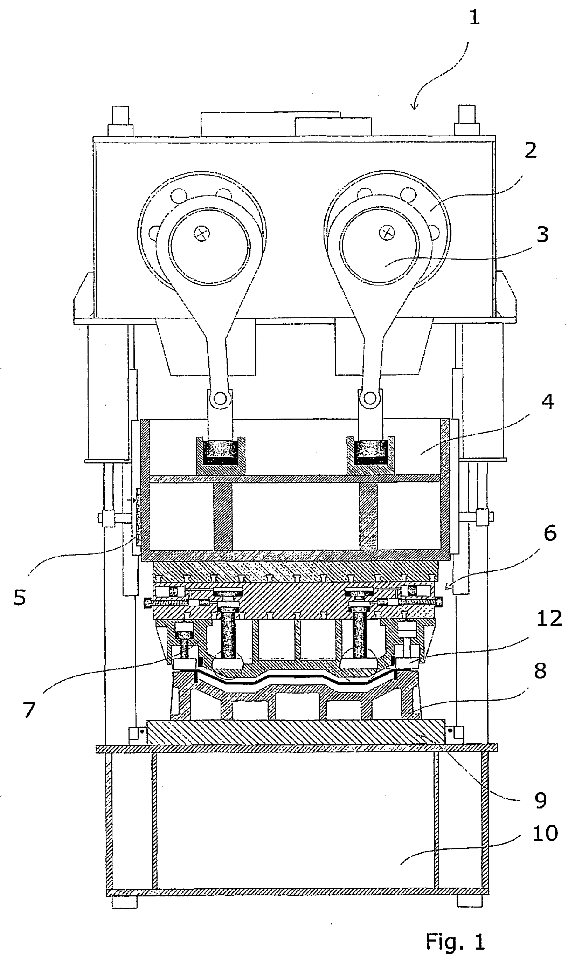

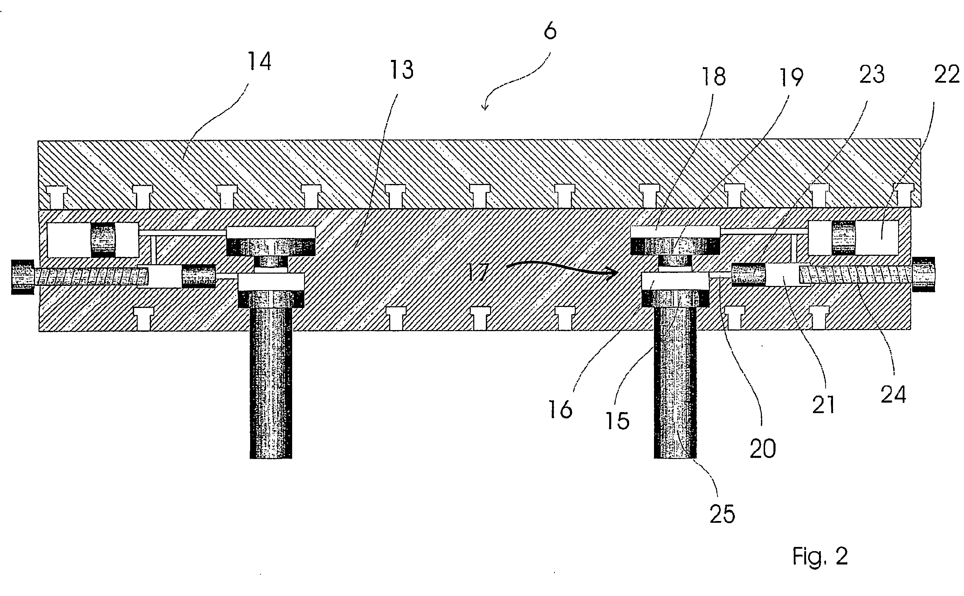

Figur 1 zeigt den schematischen Aufbau einer Presse 1, in diesem Fall einer Schneidpresse. Die Presse 1 verfügt über Antriebsräder 2, welche über Exzenter 3 einen Stößel 4 in eine vertikale Hubbewegung versetzen. Die Position des Stößels 4 wird über ein Wegmeßsystem 5 erfasst. Am Stößel 4 ist die erfindungsgemäße Schnittschlagdämpfungsvorrichtung 6 befestigt, welche wiederum mit dem Werkzeugoberteil 7 verbunden ist. Das Werkzeugunterteil 8 ist mit einem Schiebetisch 9 verbunden. Der Schiebetisch 9 wiederum ist mit dem Pressentisch 10 verspannt. In der dargestellten Position befindet sich zwischen dem Werkzeugoberteil 7 und dem Werkstückunterteil 8 ein Werkstück 11. Durch eine Klemmung zwischen einem Blechhalter 12 und dem Werkzeugunterteil 8 wird das Werkstück 11 gehalten. Eine detaillierte Darstellung der erfindungsgemäßen Schnittschlagdämpfungsvorrichtung 6 ist in Figur 2 zu sehen. Sämtliche hydraulischen Komponenten sind in einer Trägerplatte 13 integriert, welche mit der Stößelplatte 14 fest verbunden ist. Das zentrale Element der Schnitttschlagdämpfungsvorrichtung 6 bildet ein Druckübersetzer 17 mit zwei unterschiedlich großen Zylinderkammern 16, 18 und den zugehörigen Kolben 15, 19. Die Zylinderkammer 16 ist über einen Verbindungskanal 20 mit einer weiteren Zylinderkammer 21, welche rückseitig mit einem Druckspeicher 22 beaufschlagt wird, verbunden. In der Zylinderkammer 21 befindet sich ein horizontal beweglicher schwimmender Kolben 23. Bei ansteigendem Druck in der Zylinderkammer 16, bewegt sich der schwimmende Kolben 23 von dieser weg bis sein Weg von einem mechanischen Anschlag 24 begrenzt wird. Die Position der mechanischen Anschlages 24 und somit der Weg des schwimmenden Kolbens 23 ist einstellbar.

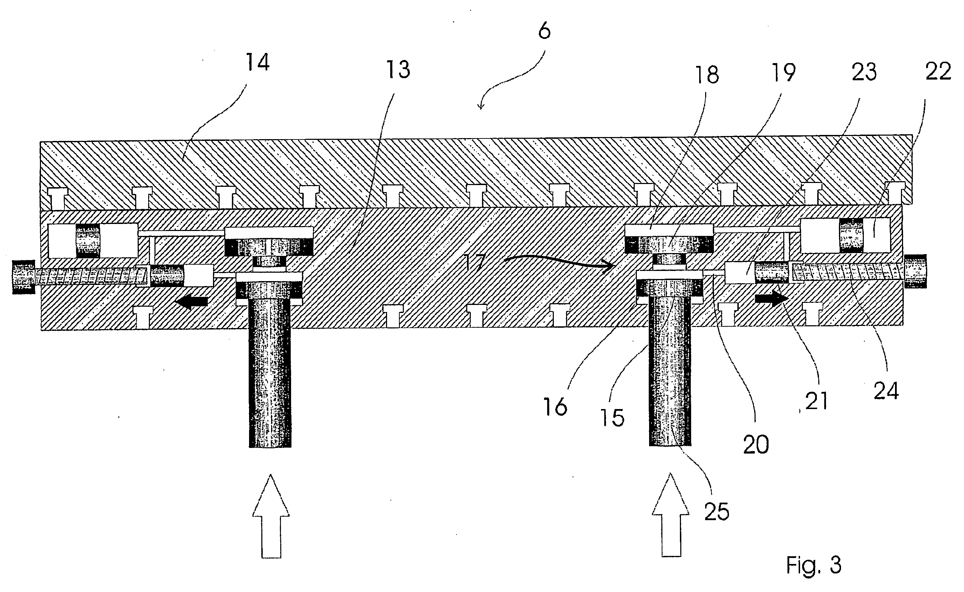

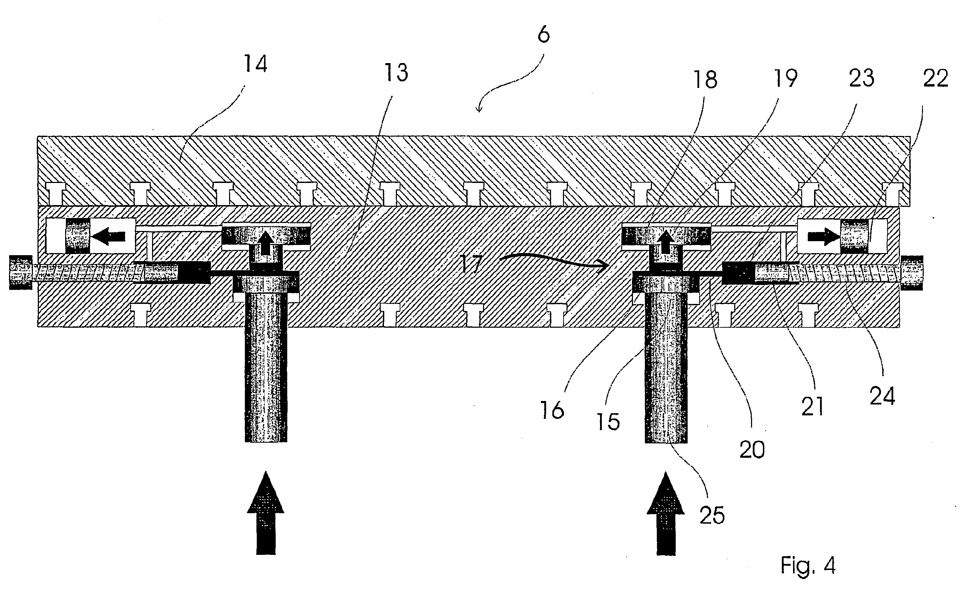

In Figur 3 ist die Schnittschlagdämpfungsvorrichtung 6 in einer Stellung kurz vor dem Materialdurchbruch des zu schneidenden Werkstückes 11 dargestellt. Durch eine Bewegung der Kolbenstangen 25, welche sich am Werkzeugunterteil 8 abstützen, in Richtung der Stößelplatte 14, baut sich über den Kolben 16 in der Zylinderkammer 16 ein Druck auf, der groß genug ist um den schwimmenden Kolben 23 in Richtung des mechanischen Anschlages 24 zu bewegen. Sobald der schwimmende Kolben 23 den mechanischen Anschlag 24 erreicht hat, baut sich der Druck sehr schnell auf bis bei Erreichen eines Druckschwellwertes der Kolben 19 des Druckübersetzers 17 gegen den Speicherdruck bewegt wird. Durch die größere Fläche des Kolbens 19 im Vergleich zu Kolben 15 wirkt nun eine größere Gegenkraft. Dieser Vorgang ist in Figur 4 zu sehen. Der Mechanische Anschlag 24 kann nun so eingestellt werden, dass der Moment des Materialdurchbruches genau dem Umschalten des Druckübersetzers 17 von der kleinen zur großen Gegenkraft entspricht.

Die Erfindung ist nicht auf das dargestellte und beschrieben Ausführungsbeispiel beschränkt. Sie umfasst auch alle fachmännischen Weiterbildungen im Rahmen der Erfindung wie sie in den Ansprüchen definiert ist. So ist es beispielsweise denkbar, dass die erfindungsgemäße Schnittschlagdämpfung in den Stößel oder in das Werkzeugoberteil integriert wird.

### Bezugszeichenliste

- 1.: Presse
- 2.: Antriebsräder
- 3.: Exzenter
- 4.: Stößel
- 5.: Wegmeßsystem
- 6.: Schnittschlagdämpfungsvorrichtung
- 7.: Werkzeugoberteil
- 8.: Werkzeugunterteil
- 9.: Schiebetisch
- 10.: Pressentisch
- 11.: Werkstück
- 12.: Blechhalter
- 13.: Trägerplatte
- 14.: Stößelplatte
- 15.: Kolben
- 16.: Zylinderkammer
- 17.: Druckübersetzer
- 18.: Zylinderkammer
- 19.: Kolben
- 20.: Verbindungskanal
- 21.: Zylinderkammer
- 22.: Druckspeicher
- 23.: schwimmender Kolben
- 24.: mechanischer Anschlag
- 25.: Kolbenstange

## Patentansprüche

1. Verfahren zur Reduzierung des Schnittschlages an einer Presse mittels eines hydraulischen Systems, welches während eines Schneidvorganges unterschiedliche der Schneidkraft entgegenwirkende Kräfte auf den Stößel ausübt, **dadurch gekennzeichnet, dass** ein Umschalten von mindestens zwei unterschiedlichen Gegenkräften während des Schneidvorganges innerhalb eines geschlossenen Hydrauliksystems erfolgt, und dass der Zeitpunkt dieses Umschaltens vom Stößelweg abhängig ist.

2. Verfahren nach Anspruch 1, **dadurch gekennzeichnet, dass** mindestens zwei unterschiedliche Gegenkräfte aus unterschiedlichen Flächenverhältnissen von Kolben (16, 19) eines Druckübersetzers (17) resultieren.

3. Verfahren nach Anspruch 1 und 2, **dadurch gekennzeichnet, dass** der Zeitpunkt der Umschaltung mittels eines mechanischen Anschlages (24) werkzeugspezifisch vorwählbar ist.

4. Verfahren nach einem oder mehreren der Ansprüche 1 bis 3, **dadurch gekennzeichnet, dass** die Kolbenstangen (25) mit dem Werkzeugunterteil (8) während des Schneidvorganges in Wirkverbindung stehen.

5. Verfahren nach einem oder mehreren der Ansprüche 1 bis 4, **dadurch gekennzeichnet, dass** die Kolbenstangen (25) mit dem Blechhalter (12) in Wirkverbindung stehen.

6. Verfahren nach einem oder mehreren der Ansprüche 1 bis 5, **dadurch gekennzeichnet, dass** jeder Druckübersetzer (17) und ein schwimmender Kolben (23) mit einer Kolbenstange (25) wirkverbunden ist.

7. Verfahren nach einem oder mehreren der Ansprüche 1 bis 6, **dadurch gekennzeichnet, dass** ein Druckübersetzer (17) und ein schwimmender Kolben (23) mit mindestens zwei Kolbenstangen (25) wirkverbunden ist.

8. Vorrichtung zur Reduzierung des Schnittschlages an einer Presse mittels eines hydraulischen Systems, welches während eines Schneidvorganges unterschiedliche der Schneidkraft entgegenwirkende Kräfte auf den Stößel (8) ausübt, **dadurch gekennzeichnet, dass** die Gegenkräfte von einem Druckspeicher (22) innerhalb eines geschlossenen hydraulischen Systems aufgebracht werden, wobei der Druckspeicher (22) mit einem Druckübersetzer (17) wirkverbunden ist, wobei der Druckübersetzer (17) über mindestens zwei Kolben (15, 19) mit unterschiedlichen Flächen verfügt, mittels welcher unterschiedliche Gegenkräfte auf die Kolbenstangen (25) realisierbar sind, wobei eine Umschaltung der wirksamen Kolbenflächen mittels eines schwimmenden Kolbens (23) erfolgt, welcher über einen Verbindungskanal (20) mit der Zylinderkammer (16) verbunden ist, und wobei der Weg des schwimmenden Kolbens (23) durch einen mechanischen Anschlag (24) begrenzbar ist.

9. Vorrichtung nach Anspruche 8, **dadurch gekennzeichnet, dass** die Position des mechanischen Anschlags (24) bezogen auf den Weg des schwimmenden Kolbens (23) unabhängig von der Hubzahl der Presse (1) vorwählbar ist.

10. Vorrichtung nach einem oder mehreren der Ansprüche 8 und 9, **dadurch gekennzeichnet, dass** alle hydraulischen Komponenten der Schnittschlagdämpfungsvorrichtung (6) in einer Trägerplatte (14) integriert sind.

11. Vorrichtung nach einem oder mehreren der Ansprüche 8 bis 10, **dadurch gekennzeichnet, dass** die Schnittschlagdämpfungsvorrichtung (6) mit dem Stößel (4) oder der Trägerplatte (14) fest verbunden ist.

12. Vorrichtung nach einem oder mehreren der Ansprüche 8 bis 11, **dadurch gekennzeichnet, dass** die Schnittschlagsdämpfungsvorrichtung (6) mit dem Werkzeugoberteil (7) fest verbunden ist.

13. Vorrichtung nach einem oder mehreren der Ansprüche 8 bis 12, **dadurch gekennzeichnet, dass** die Schnittschlagdämpfungsvorrichtung (6) in den Stößelkörper (4) integrierbar ist.

14. Vorrichtung nach einem oder mehreren der Ansprüche 8 bis 13, **dadurch gekennzeichnet, dass** die Kolbenstangen (25) mit dem Werkzeugunterteil (8) während des Schneidvorganges im Wirkverbindung stehen.

15. Vorrichtung nach einem oder mehreren der Ansprüche 8 bis 14, **dadurch gekennzeichnet, dass** die Kolbenstangen (25) mit dem Blechhalter (12) in Wirkverbindung stehen.

16. Vorrichtung nach einem oder mehreren der Ansprüche 8 bis 15, **dadurch gekennzeichnet, dass** jeder Druckübersetzer (17) und jeder schwimmende Kolben (23) mit einer Kolbenstange (25) wirkverbunden ist.

17. Vorrichtung nach einem oder mehreren der Ansprüche 8 bis 16, **dadurch gekennzeichnet, dass** ein Druckübersetzer (17) und ein schwimmender Kolben (23) mit mindestens zwei Kolbenstangen (25) wirkverbunden ist.

## Claims

1. Method for dampening the cutting shock on a press by means of a hydraulic system, which during a cutting operation exerts different forces that act against the cutting force on the ram, **characterised in that** the switching between at least two different counter forces during the cutting operation is performed within a closed hydraulic system, and **in that** the timing of the switching is dependent on the ram path.

2. Method according to claim 1, **characterised in that** at least two different counter forces are the result of the varying surface ratios of the pistons (16, 19) of a pressure translator (17).

3. Method according to claim 1 and 2, **characterised in that** the timing of the switch-over can be preselected as specific to the tool by means of a mechanical end stop (24).

4. Method according to one or more of claims 1 to 3, **characterised in that** the piston rods (25) are in active connection with the lower part of the tool (8) during the cutting operation.

5. Method according to one or more of claims 1 to 4, **characterised in that** the piston rods (25) are in active connection with the blank holder (12).

6. Method according to one or more of claims 1 to 5, **characterised in that** each of the pressure translators (17) and a floating piston (23) are actively connected to a piston rod (25).

7. Method according to one or more of claims 1 to 6, **characterised in that** a pressure translator (17) and a floating piston (23) are connected to at least two piston rods (25).

8. Device for dampening the cutting shock on a press by means of a hydraulic system, which during a cutting operation exerts different forces that act against the cutting force on the ram (8), **characterised in that** the counter forces are applied by a pressure storage device (22) within a closed hydraulic system, wherein the pressure storage device (22) is actively connected to a pressure translator (17), wherein the pressure translator (17) has at least two pistons (15, 19) with different surfaces, by means of which different counter forces can be produced on the piston rods (25), wherein a switch is made between the effective piston faces by means of a floating piston (23), which is connected via a connecting channel (20) to the cylinder chamber (16), and wherein the path of the floating piston (23) can be limited by a mechanical stop (24).

9. Device according to claim 8, **characterised in that** the position of the mechanical end stop (24) relative to the path of the floating piston (23) can be preselected independently of the strokes per minute of the press (1).

10. Device according to one or more of claims 8 and 9, **characterised in that** all of the hydraulic components of the cutting shock dampening device (6) are integrated into a support plate (14).

11. Device according to one or more of claims 8 to 10, **characterised in that** the cutting shock dampening device (6) is securely connected to the ram (4) or the support plate (14).

12. Device according to one or more of claims 8 to 11, **characterised in that** the cutting shock dampening device (6) is securely connected to the upper part of the tool (7).

13. Device according to one or more of claims 8 to 12, **characterised in that** the cutting shock dampening device (6) can be integrated into the ram body (4).

14. Device according to one or more of claims 8 to 13, **characterised in that** the piston rods (25) are in active connection with the lower part of the tool (8) during the cutting operation.

15. Device according to one or more of claims 8 to 14, **characterised in that** the piston rods (25) are in active connection with the blank holder (12).

16. Device according to one or more of claims 8 to 15, **characterised in that** each pressure translator (17) and each floating piston (23) are actively connected to a piston rod (25).

17. Device according to one or more of claims 8 to 16, **characterised in that** a pressure translator (17) and a floating piston (23) are actively connected to at least two piston rods (25).

## Revendications

1. Procédé de réduction de la percussion de coupe d'une presse à l'aide d'un système hydraulique exerçant pendant une opération de coupe, des efforts différents s'opposant à la force de coupe sur le poussoir, **caractérisé en ce qu'**
on commute au moins deux forces antagonistes différentes au cours de l'opération de coupe dans un système hydraulique fermé, et
l'instant de la commutation dépend de la course du poussoir.

2. Procédé selon la revendication 1,
**caractérisé en ce que**
deux forces antagonistes différentes résultent de conditions de surface différentes du piston (16, 19) d'un convertisseur de pression (17).

3. Procédé selon l'une des revendications 1 et 2,
**caractérisé en ce qu'**
on présélectionne l'instant de la commutation à l'aide d'une butée mécanique (24) spécifique à l'outil.

4. Procédé selon l'une des revendications 1 à 3,
**caractérisé en ce que**
les tiges de pistons (25) coopèrent avec la partie inférieure (8) de l'outil au cours de l'opération de coupe.

5. Procédé selon l'une des revendications 1 à 4,
**caractérisé en ce qu'**
les tiges de pistons (25) coopèrent avec le serre-flan (12).

6. Procédé selon l'une des revendications 1 à 5,
**caractérisé en ce que**
chaque convertisseur de pression (17) et un piston flottant (23), coopèrent avec une tige de piston (25).

7. Procédé selon l'une des revendications 1 à 6,
**caractérisé en ce qu'**
un convertisseur de pression (17) et un piston flottant (23), coopèrent avec au moins deux tiges de pistons (25).

8. Dispositif de réduction de la percussion de coupe d'une pression à l'aide d'un système hydraulique exerçant au cours d'une opération de coupe, des efforts s'opposant à la force de coupe sur le poussoir (8),
**caractérisé en ce que**
les forces antagonistes sont appliquées par un accumulateur de pression (22) dans un système hydraulique fermé,
l'accumulateur de pression (22) coopérant avec un convertisseur de pression (17),
le convertisseur de pression (17) comportant au moins deux pistons (15, 19) ayant des surfaces différentes permettant de réaliser des forces antagonistes différentes exercées sur les tiges de pistons (25),
la commutation des surfaces actives de piston se faisant à l'aide d'un piston flottant (23) relié par un canal de liaison (20) à la chambre de cylindre (16), et
la course du piston flottant (23) est limitée par une butée mécanique (24).

9. Dispositif selon la revendication 8,
**caractérisé en ce que**
rapportée à la course du piston flottant (23), la position de la butée mécanique (24) se présélectionne indépendamment du nombre de courses de la presse (1).

10. Dispositif selon l'une des revendications 8 et 9,
**caractérisé en ce que**
tous les composants hydrauliques du dispositif d'amortissement des percussions de coupe (6), sont intégrés dans une plaque de support (14).

11. Dispositif selon l'une des revendications 8 à 10,
**caractérisé en ce que**
le dispositif d'amortissement des percussions de coupe (6) est relié solidairement au poussoir (4) ou à la plaque de support (14).

12. Dispositif selon l'une des revendications 8 à 11,
**caractérisé en ce que**
le dispositif d'amortissement des percussions de coupe (6) est relié solidairement à la partie supérieure (7) de l'outil.

13. Dispositif selon l'une des revendications 8 à 12,
**caractérisé en ce que**
le dispositif d'amortissement des percussions de coupe (6) est intégré dans le corps (4) du poussoir.

14. Dispositif selon l'une des revendications 8 à 13,
**caractérisé en ce que**
les tiges de pistons (25) coopèrent avec la partie inférieure (8) de l'outil au cours de l'opération de coupe.

15. Dispositif selon l'une des revendications 8 à 14,
**caractérisé en ce que**
les tiges de pistons (25) coopèrent avec le serre-flan (12).

16. Dispositif selon l'une des revendications 8 à 15,
**caractérisé en ce que**
chaque convertisseur de pression (17) et chaque piston flottant (23) coopèrent avec une tige de piston (25).

17. Dispositif selon l'une des revendications 8 à 16,
**caractérisé en ce qu'**
un convertisseur de pression (17) et un piston flottant (23) sont reliés à au moins deux tiges de pistons (25).
